# EUROPÄISCHE PATENTSCHRIFT

(11) **EP 0 406 594 B1**
(45) Veröffentlichungstag und Bekanntmachung des Hinweises auf die Patenterteilung: **22.09.1993**
(21) Anmeldenummer: 90111230.0
(22) Anmeldetag: 13.06.1990
(51) Int. Cl.: H01M 4/73, H01M 4/68, H01M 4/82

(54) **Elektrode für elektrochemische Zellen**
Electrode for electrochemical cells
Electrode pour cellules électrochimiques

(30) Priorität: 07.07.1989 DE 3922424
(43) Veröffentlichungstag der Anmeldung: 09.01.1991
(73) Patentinhaber: HAGEN BATTERIE AG, D-59494 Soest (DE)
(72) Erfinder: Drews, Jürgen, D-4770 Soest (DE); Berger, Karl Christoph, D-4772 Bad Sassendorf (DE)
(74) Vertreter: Manitz, Gerhart, Dipl.-Phys. Dr.

(56) Entgegenhaltungen:
- FR-A- 2 278 168
- US-A- 4 129 692
- JOURNAL OF APPLIED ELECTROCHEMISTRY. Bd. 15, Nr. 3, 1985, LONDON GB Seiten 421 - 429; J.C.VIALA ET AL: 'GRILLES NEGATIVES COMPOSITES POUR ACCUMULATEURS AU PLOMB '

## Beschreibung

Die Erfindung betrifft eine Elektrode für elektrochemische Zellen, insbesondere Negativelektrode für Akkumulatoren, insbesondere Bleiakkumulatoren, bestehend aus einer Gitterplatte, die als Träger für die aktive Masse und zur Stromzu- und -abführung dient.

Bekanntlich besteht ein elektrochemischer Energiespeicher, der auch als elektrochemische Zelle bezeichnet wird, aus drei Grundkomponenten, nämlich den aktiven Massen, Gittern zur Aufnahme und Halterung der aktiven Massen sowie einem zwischen den Gitter befindlichen Elektrolyten. Im allgemeinen sind die positiven und negativen Gitter noch durch Separatoren voneinander getrennt.

Die Gitterplatte in der elektrochemischen Zelle dient sowohl als Masseträger als auch zur Führung des Elektronenstroms bei den Lade- bzw. Entladereaktionen in den aktiven Massen. Der Elektronenstrom wird bei der Entladung an einen Verbraucher abgegeben und bei der Ladung aus einer Stromquelle den aktiven Massen über die Gitterplatten zugeführt.

Es ist bereits bekannt, Gitterplatten insbesondere für die negativen Elektroden von Bleiakkumulatoren aus Metall herzustellen. Die Herstellung der Gitterplatten erfolgt dabei meist durch Gießen von Blei oder aber auch durch die Verwendung von Kupferstreckmetall, das anschließend mit Blei-Zinnlegierungen und/oder Blei überzogen wird (DE-A- 33 12 550).

Ein Problem bei den bekannten Gitterplatten besteht darin, daß sie relativ schwer sind und daß auch die realisierbaren Gitterformen durch den Gießprozeß bzw. die Herstellung aus Kupferstreckmetall beschränkt sind.

Zur Verringerung der Bleimenge in Akkumulatoren ist es bereits bekannt geworden (DE-C- 27 16 131), ein Kunststoffgitter als Grundkörper für die Gitterplatte zu verwenden und darauf ein fächerförmiges Gebilde aus Bleidrähten anzuordnen, welches durch Erhitzen mit dem Kunststoffgitter verbunden wird. Hier werden also die Funktionen des Trägermaterials für die aktive Masse und der Stromleitung auf zwei verschiedene Bestandteile der Gitterplatte verteilt, was zu einer aufwendigen Herstellung und schlechtem Wirkungsgrad führt. Es ist weiter bekannt (US-PS 3 607 412), ein konventionell aufgebautes, flächiges Kunststoffgitter durch Aufsprühen von geschmolzenem Blei zu beschichten und dadurch leitfähig zu machen.

Ein generelles Problem bei der Verwendung von Kunststoffgittern als Gitterplatte besteht darin, daß im allgemeinen selbst dann keine ausreichende und über die Fläche gleichmäßig verteilte Stromleitfähigkeit gegeben ist, wenn ein Metallüberzug vorliegt, und die Aufnahmekapazität für die aktive Masse begrenzt ist. Weiter sind die Abstände der aktiven Masse von den leitenden Teilen der Gitterplatte häufig so groß, daß der Wirkungsgrad ungenügend ist. Auch die mechanische Halterung der aktiven Masse ist unbefriedigend.

Das Ziel der Erfindung besteht somit darin, eine Elektrode der eingangs genannten Gattung zu schaffen, welche besonders wirtschaftlich herstellbar ist, ein möglichst geringes Gewicht aufweist, in einer Vielzahl von auch komplizierten Formen herstellbar ist und einen besonders guten elektrochemischen Wirkungsgrad aufweist, wobei eine gute und elektrisch effektive Halterung der aktiven Masse gewährleistet sein soll.

Zur Lösung dieser Aufgabe geht die Erfindung von einer als Kunststoffnetzwerk ausgebildeten Gitterplatte aus, wobei das Kunststoffnetzwerk vorzugsweise mit einer gut leitenden, dünnen Metallschicht, insbesondere aus Kupfer überzogenen Kunststoffäden besteht und zur Bildung einer dreidimensionalen Struktur mit vorzugsweise durch Tiefziehen erzeugten, über ihre Fläche verteilten, buckelartigen Vertiefungen und/oder Erhöhungen versehen ist, in deren Bereich der Abstand zwischen den Kunststoffäden vergrößert ist. Derartige, für die Zwecke der vorliegenden Erfindung besonders geeignete Kunststoffnetzwerke sind in der gleichzeitig eingereichten Gemeinschafts-Patentanmeldung der Anmelderin und der Firma HOECHST AG mit dem Titel "Elektroden für galvanische Primär- und Sekundärelemente" beschrieben. (DE-A- 39 22 425).

Zur Lösung der vorgenannten Aufgabe ist gemäß vorliegender Erfindung vorgesehen, daß das Kunststoffnetzwerk mit wenigstens einer weiteren Beschichtung aus einer Blei-Zinnlegierung oder aus Blei überzogen ist und in wenigstens einem für die Aufnahme der aktiven Masse vorgesehenen Speicherbereich, wo sich eine Vielzahl von Vertiefungen und/oder Erhöhungen befindet, sowie in wenigstens einem Stromleitbereich, wo das Kunststoffnetzwerk eine flächige, zweidimensionale Struktur hat, unterteilt ist. Hierbei ist es zweckmäßig, wenn das Kunststoffnetzwerk in dem Speicherbereich an im wesentlichen allen Stellen vorzugsweise weitgehend im gleichen Maße zweidimensional verzogen ist, während es im Stromleitbereich unverzogen ist. Weiter ist es vorteilhaft, wenn in dem Speicherbereich nur die Kunststoffäden von der Blei-Zinnlegierung oder dem Blei überzogen sind und die Maschenöffnungen frei bleiben, während in den Stromleitbereichen auch die Maschen zwischen den Kunststoffäden von der Blei-Zinnlegierung oder dem Blei ausgefüllt sind. Der Erfindungsgedanke ist also darin zu sehen, ein aus Kunststoffäden gebildetes Kunststoffnetzwerk dadurch in optimaler Weise als negative Elektrode insbesondere für einen Bleiakkumulator auszugestalten, daß es in erster Linie der Aufnahme der aktiven Masse dienende, durchgehend eine dreidimensionale, filigrane Struktur aufweisende Speicherbereiche, welche zusätzlich auch noch der Ab- und Zuleitung der Ströme aus der aktiven Masse bzw. in die aktive Masse dienen, und Stromleitbereiche unterteilt ist, die vorzugsweise geeignet zwischen den Speicherbereichen verteilt angeordnet sind und aufgrund der Engmaschigkeit und der kürzeren Strombahnen in besonderem Maße dazu geeignet sind, den Strom von den Speicherbereichen zur Anschlußfahne bzw. von der Anschlußfahne zu den Speicherbereichen in möglichst widerstandsarmer Weise zu leiten. Aufgrund der Engmaschigkeit des Kunststoffnetzwerkes in den Stromleitbereichen sind dort die Maschen des Kunststoffnetzwerkes mit Blei-Zinn bzw. Blei ausgefüllt, was für die Zwecke einer möglichst widerstandsarmen Stromleitung von Bedeutung ist. Andererseits sind die Maschen in den Speicherbereichen vorzugsweise durchgehend so weit, daß dort lediglich die Kunststoffaden mit Blei-Zinn bzw. Blei überzogen sind, während die Maschen selbst frei bleiben. Dadurch kann sich die aktive Masse nicht nur zwischen den Wänden der Vertiefungen bzw. Erhöhungen, sondern auch in den offen bleibenden Maschen fest verankern, und es steht eine große Gesamtoberfläche für den Stromübergang von der aktiven Masse in die Gitterplatte und umgekehrt zur Verfügung.

Allenfalls konnten zwischen den verzogenen Erhöhungen und Vertiefungen noch kleinere unverzogene Bereiche verbleiben, die die Halterung und Strombeschickung der aktiven Masse nicht merklich beeinträchtigen.

Eine besonders gute Stromleitung wird erzielt, wenn die Kunststoffäden aus einer Vielzahl von relativ flauschig aneinanderliegenden, dünnen Monofilamenten insbesondere aus synthetischem Material bestehen, so daß aufgrund des Überziehens dieser Monofilamente mit dem gut leitenden Metall, insbesondere Kupfer eine große Metalloberfläche und damit ein relativ großer Querschnitt für die Stromleitbahnen geschaffen wird. Weiter kann auf diese Weise auch das flüssige Blei/Zinn bzw. Blei in die Zwischenräume zwischen den vielen Monofilamenten der Kunststoffäden eindringen und dort ebenfalls zur Schaffung eines möglichst großen stromleitenden Metallquerschnitts beitragen. Außerdem wird das Blei/Zinn bzw. Blei so besonders gut im Kunststoff-Netzwerk verankert.

Die Kunststoffäden können entweder durch einen Webprozeß oder auch durch andere Techniken zu einem Kunststoffnetzwerk verbunden sein. Weiter können auch mehrere jeweils aus vielen Monofilamenten bestehende Fäden miteinander verdrillt oder verflochten sein, wobei die Aufbringung der gut leitenden Metallschicht erst nach Fertigstellung des Kunststoffnetzwerkes einschließlich der Vertiefungen und/oder Erhöhungen erfolgt.

Einen je kleineren Durchmesser die in den Kunststoffäden verwendeten Monofilamente haben und je mehr Monofilamente pro Kunststoffäden vorgesehen sind, eine umso größere Oberfläche steht für die Aufnahme der gut leitenden Metallschicht und auch für den Einbau von Blei/Zinn bzw. Blei in die Zwischenräume zur Verfügung.

Da Kunststoffe ein wesentlich geringeres spezifisches Gewicht als Metalle aufweisen, zeichnet sich die erfindungsgemäße Gitterplatte durch ein besonders niedriges Gewicht aus.

Gleichwohl sind die Stromleit- und elektrochemischen Eigenschaften denen herkömmlicher Gitterplatten überlegen, weil aus durch viele Monofilamente gebildeten Kunststoffäden bestehende Netzwerke besonders fein ausgestaltet werden können und somit eine besonders große effektive Oberfläche für die Aufbringung der Metallbeschichtungen zur Verfügung steht. Da sich Kunststoffnetzwerke in jeder gewünschten Weise auch von der ebenen Ausbildung abweichend verbiegen oder sonstwie verformen lassen, kann die erfindungsgemäße Gitterplatte in jeder gewünschten Form realisiert werden und beispielsweise auch in Form eines Wickels ausgestaltet sein.

Die Beschichtung der Kunststoffäden mit der gut leitenden, dünnen Metallschicht erfolgt vorzugsweise dadurch, daß zunächst beispielsweise ein Metallfilm aus Kupfer in einer Stärke von 0,5 bis 2 µm aufgebracht wird und anschließend eine elektrolytische Metallisierung mit Kupfer solange erfolgt, bis ein Metallüberzug von 1 bis 200, insbesondere 5 bis 100 und vorzugsweise 10 bis 50 µm vorliegt. Als Material für die Kunststöffäden kann mit Vorteil Polyester verwendet werden, wobei das Kunststoffnetzwerk zweckmäßigerweise mittels Thermo- oder Duroplasten formstabilisiert ist. Hierfür eignet sich insbesondere Phenolharz und Acrylharz.

Eine vorteilhafte Ausgestaltung der erfindungsgemäßen Elektrode kennzeichnet sich dadurch, daß die weitere Beschichtung aus einer Blei-Cadmium-Selen-Arsen-Antimon-Legierung, insbesondere einer Blei-Zinnlegierung mit vorzugsweise 20 bis 90% Blei, insbesondere etwa 80 bis 90% Blei (Rest Zinn) besteht, die vorzugsweise eine Dicke von 5 bis 20, insbesondere etwa 10 µm aufweist, falls noch eine weitere Bleibeschichtung aufgebracht wird, und eine Dicke von 30 bis 150 µm, vorzugsweise 40 bis 60 µm, insbesondere 50 µm aufweist, falls nur eine Schicht aus einer Blei-Zinnlegierung aufgebracht wird.

Besonders vorteilhaft ist es, wenn auf die gut leitende Metallschicht oder bevorzugt auf die weitere Beschichtung eine Bleischicht mit einer Dicke von vorzugsweise 30 bis 70, insbesondere 40 bis 60 und bevorzugt etwa 50 µm aufgebracht ist. Von den weiteren Beschichtungen soll wenigstens die erste galvanisch aufgebracht sein.

Die galvanische Beschichtung des Kunststoffnetzwerkes ist deswegen vorteilhaft, weil hierbei der Kunststoff keine Erhitzung erfährt, die ein Schmelzen oder gar eine Zersetzung nach sich ziehen könnte.

Es ist aber auch möglich, daß von den weiteren Beschichtungen wenigstens eine und vorzugsweise die letzte durch Eintauchen in ein Schmelzbad des Überzugsmetalls aufgebracht ist, wobei insbesondere die Eintauchzeiten während der das Netzwerk sich im Schmelzbad befindet, so kurz sind, daß der Schmelzpunkt des Kunststoffmaterials, aus dem das Kunststoffnetzwerk besteht, nicht überschritten wird. Die Temperatur des Schmelzbades soll dabei 400 bis 700° K, insbesondere 500 bis 600° K und die Eintauchzeit 1 bis 4, insbesondere 1 bis 2 sec. betragen. Es ist also auch möglich, das bereits galvanisch mit einem gut leitenden Metall überzogene Kunststoffnetzwerk kurzzeitig in ein Blei- oder Blei-Zinn-Legierungs-Schmelzbad einzutauchen, sofern die Eintauchzeiten ausreichend kurz bemessen sind. Die gut leitende Metallschicht wirkt hierbei vorteilhaft auch als Wärmeleiter.

Eine bevorzugte Weiterbildung der Erfindung besteht darin, daß vor Aufbringen der weiteren Beschichtung die mit dem gut leitenden Metall überzogene Gitterplatte in einem Reinigungsbad, das vorzugsweise aus einer wässrigen Zitronensäurelösung, die insbesondere 20%ig bis gesättigt ist, besteht, einem Reinigungsprozeß unterzogen wird. Die Aufenthaltszeit im Reinigungsbad soll dabei 2 bis 10 und insbesondere 4 bis 8 sowie bevorzugt 5 sec. betragen. Die Reinigungsbadtemperatur soll im Bereich von 250° bis 350°, insbesondere 290° bis 320° und bevorzugt bei etwa 300° K liegen. Die Verwendung eines gekühlten Reinigungsbades ist besonders zweckmäßig, weil hierdurch einer übermäßigen Erhitzung des Kunststoffnetzwerkes bei einer anschließenden Beschichtung im Schmelzbad entgegengewirkt wird.

Wenigstens an der Seite der Gitterplatte, wo die Stromabnahme erfolgt, soll ein Stromleitbereich vorgesehen sein. Hierbei ist es bevorzugt, wenn die Anschlußfahne der Gitterplatte als Stromleitbereich ausgebildet ist. Insbesondere kann der um die Gitterplatte herum verlaufende Randbereich als Stromleitbereich ausgebildet sein.

Vorteilhafterweise sind zwischen inselartig angeordneten Speicherbereichen straßenartig verlaufende Stromleitbereiche angeordnet. Von der Stelle, insbesondere Ecke der Gitterplatte, wo die Anschlußfahne angeordnet ist, soll zur diagonal gegenüberliegenden Ecke ein diagonaler Stromleitbereich verlaufen. Auf diese Weise wird erreicht, daß die Stromleitbereiche so über die Fläche der Gitterplatte verteilt sind, daß von und zu allen Speicherbereichen besonders widerstandsarme Stromzu- bzw. -ableitungen gewährleistet sind.

Die Herstellung der erfindungsgemäßen Elektrode bzw. von daraus gebildeten Plattensätzen kann dadurch besonders wirtschaftlich gestaltet werden, daß mehrere Gitterplatten als zusammenhängendes Band ausgebildet sind, das zu einem Plattensatz gefaltet ist.

Aufgrund der Verwendung eines auf einfache Weise verformbaren Kunststoffnetzwerkes als Gitterplatte kann eine weitere Ausführungsform darin bestehen, daß das Kunststoffnetzwerk am Rand vorzugsweise um 90° aus der Plattenebene und insbesondere abwechselnd in der einen oder anderen Richtung senkrecht zur Plattenebene abgebogene Massentragstege aufweist, welche sich zweckmäßig etwa ebensoweit aus der Plattenebene wie die Vertiefungen bzw. die Erhöhungen erheben und auch Stromleitbereiche darstellen. Durch die Massentragstege kann die in den Vertiefungen bzw. an den Erhöhungen sitzende aktive Masse seitlich, von unten sowie von oben besonders günstig festgehalten werden.

Weiter ist es vorteilhaft, wenn die Stromleitbereiche wenigstens teilweise rillen- oder rinnenförmig ausgebildet sind, wobei die Längsrichtung der Rillen bzw. Rinnen im wesentlichen in Stromflußrichtung liegt, und daß die Rillen bzw. Rinnen zumindest teilweise mit der Blei-Zinnlegierung bzw. Blei ausgegossen sind oder mit aktiver Masse gefüllt sind. Hierdurch wird der metallische Querschnitt der Stromleitbereiche erhöht und damit der Widerstand weiter herabgesetzt.

Eine weitere Ausführungsform ist so ausgebildet, daß mehrere durch Stromleitbereiche getrennte Speicherbereiche vorgesehen sind und alle Stromleitbereiche unmittelbar miteinander zusammenhängen. Hierdurch wird die Herstellung der Elektroden in einem kontinuierlichen Prozeß am laufenden Band ermöglicht.

Die Erfindung wird im folgenden beispielsweise anhand der Zeichnung beschrieben; in dieser zeigt:
- Fig. 1: eine schematische Draufsicht einer erfindungsgemäßen Elektrode,
- Fig. 2: einen stark schematisierten vergrößerten Schnitt nach Linie II-II in Fig. 1,
- Fig. 3: einen vergrößerten schematischen Schnitt nach Linie III-III in Fig. 1 einer mit einem rinnenartigen Stromleitbereich versehenen Elektrode,
- Fig. 4: einen vergrößerten Ausschnitt des Bereiches IV in Fig. 2,
- Fig. 5: eine vergrößerte Draufsicht auf einen Teil der Elektrode im Speicherbereich,
- Fig. 6: eine entsprechende Draufsicht im Stromleitbereich,
- Fig. 7: eine stark schematisierte Herstellungsvorrichtung für eine erfindungsgemäße Elektrode,
- Fig. 8: ein weiteres vorteilhaftes Ausführungsbeispiel einer derartigen Herstellungsvorrichtun,
- Fig. 9: eine perspektivische Ansicht der Kombination einer erfindungsgemäßen Elektrode mit Separatorplatten,
- Fig. 10: eine schematische perspektivische Ansicht der Kombination nach Fig. 9 in fertig gestelltem Zustand,
- Fig. 11: eine Draufsicht auf als zusammenhängendes Band ausgestaltete erfindungsgemäße Elektroden und
- Fig. 12: eine perspektivische Ansicht auf ein zu einem Plattensatz verformtes Elektrodenband nach Fig. 11.

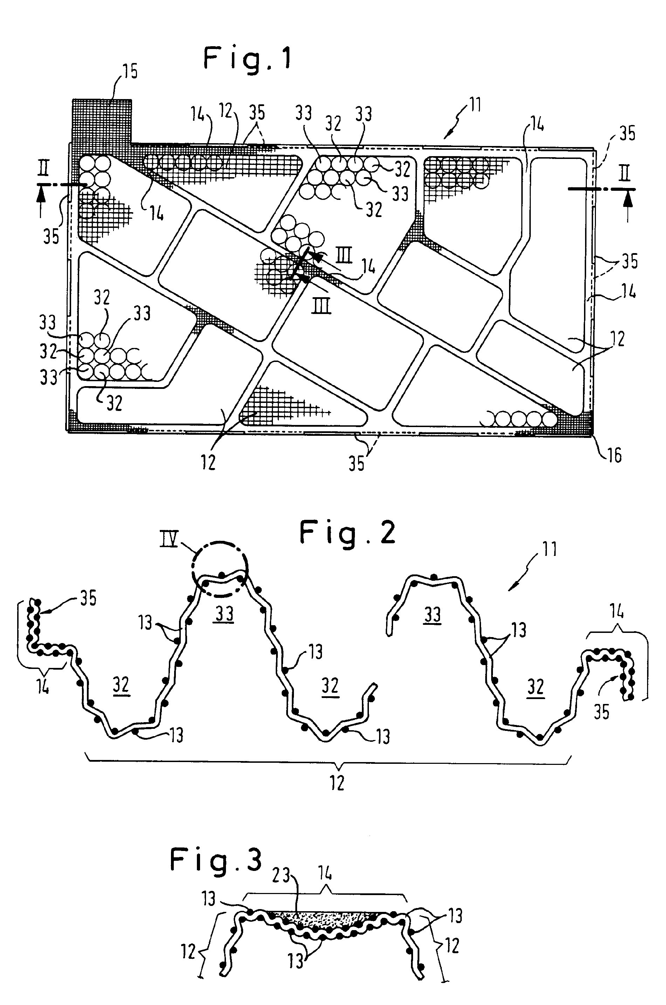

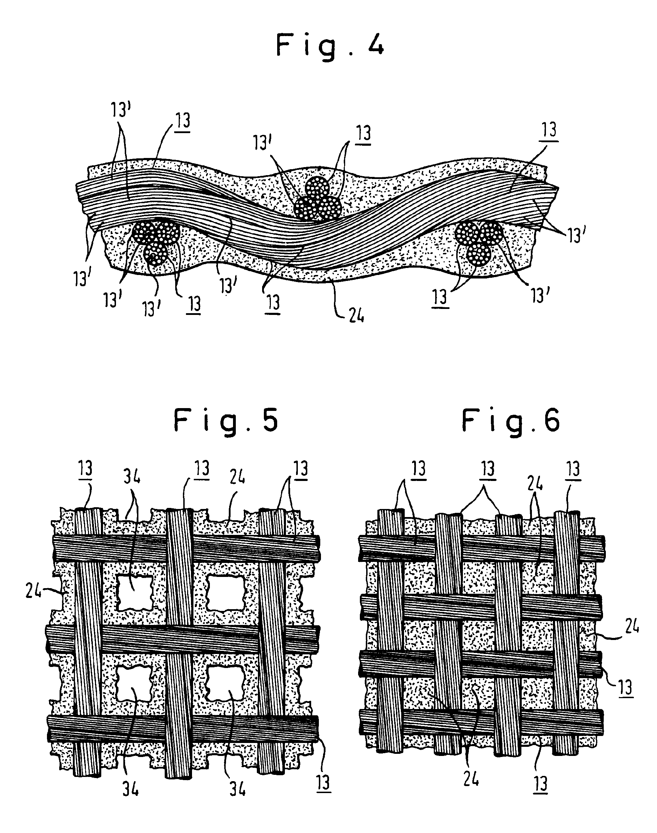

Nach Fig. 1 bis 6 besteht eine erfindungsgemäße Gitterplatte 11 aus einem vorzugsweise gewebten oder geflochtenen Kunststoff-Netzwerk, dessen einzelne Kunststoffäden 13 gemäß Fig. 4 bis 6 aus einer Vielzahl von Monofilamenten 13' bestehen, welche mit einer dünnen Kupferschicht von einigen um Dicke überzogen sind. Es können jeweils mehrere, z.B. drei Kunststoffäden (Fig. 4) durch Flechten oder Verdrillen zu größerern länglichen Gebilden miteinander verbunden sein. Die Gesamtheit der Monofilamente 13' eines Kunststoffadens 13 ist zweckmäßig verdrillt. Auf diese Kunststoffäden 13 ist eine Blei- oder Blei-Zinnlegierungs-Beschichtung 24 (Fig. 4, 5) von 40 bis 60 um aufgebracht. Die Beschichtung 24 durchdringt zweckmäßig die Kunststoffäden 13 oder dringt zumindest oberflächlich in diese ein, so daß eine möglichst große Stromübergangsfläche zwischen der Beschichtung 24 und den Kupferüberzügen der Monofilamente 13' erzielt wird.

Nach den Fig. 1 und 2 weist die erfindungsgemäße Gitterplatte 11 beispielsweise durch Tiefziehen des Kunststoffnetzwer kes bzw. der Kunststoffäden 13 teilweise aus der Ebene der Gitterplatte 11 abwechselnd nach der einen und der anderen Seite herausgeformte buckelartige Vertiefungen 32 und Erhöhungen 33 auf, die in Fig. 1 nur schematisch als Kreise und in Fig. 2 stark übertrieben und schematisiert dargestellt sind und zusammen Speicherbereiche 12 bilden, in denen später die aktive Masse untergebracht wird. Dazwischen und am Rande befinden sich in der Ebene der Gitterplatte 11 bzw. gemäß Fig. 1 und 2 bei 35 nach oben bzw. unten abgebogene Stromleitbereiche 14, innerhalb deren die benachbarten Kunststoffäden 13 so eng angeordnet sind, daß - wie aus Fig. 6 ersichtlich ist - die Maschen zwischen den Kunststoffäden 13 so klein sind, daß die auf die Kunststoffäden 13 aufgebrachte Blei-Zinn- bzw. Bleischicht 24 auch die Maschen des Kunststoffnetzwerkes ausfüllt.

Während das periodische und punktuelle Herausformen der Kunststoffäden 13 bzw. des Kunststoff-Netzwerkes aus der Ebene der Gitterplatte 11 insbesondere gemäß Fig. 2 den elektrischen Widerstand entsprechend der dadurch erzielten Verlängerung der Kunststoffäden 13 und der Schaffung von metallfreien Zwischenräumen 34 in den Maschen (Fig. 5) erhöht, bleibt der elektrische Widerstand in den Stromleitbereichen 14 gering, wobei zur Herabsetzung des Widerstandes in den Stromleitbereichen 14 auch die Ausfüllung der Maschen mit Blei-Zinn bzw. Blei beiträgt.

Aufgrund des Tiefziehvorganges zur Schaffung der Vertiefungen 32 bzw. Erhöhungen 33 werden dort die Zwischenräume 34 in den Maschen (Fig. 5) so vergrößert, daß eine beispielsweise im Tauchverfahren aufgebrachte Bleibeschichtung 24 lediglich die Kunststoffäden 13 überzieht, die Zwischenräume 34 jedoch nicht ausfüllt. Dies kommt einer festen mechanischen Halterung der später eingebrachten aktiven Masse an dem Kunststoffnetzwerk zugute. Für die gute Halterung der aktiven Masse sind weiter die Vertiefungen 32 und die Erhöhungen 33 selbst verantwortlich, welche die Masse mit Ausnahme der von der Plattenebene abgewandten Seite praktisch allseits einfassen. Die Breite der Erhöhungen 33 sowie der Vertiefungen 32 liegt im Bereich von 3 bis 10 mm, insbesondere 4 bis 6 mm. Die Tiefe der Erhöhungen 33 und Vertiefungen 32 beträgt 1 bis 5 mm, insbesondere 2 bis 3 mm. Das Verhältnis von Breite zu Tiefe soll im Bereich 2 : 1 bis 3 : 1 liegen. Insofern ist die Tiefe der Erhöhungen 33 und der Vertiefungen 32 in Fig. 2 aus Gründen einer klaren Darstellung des Erfindungsgedankens übertrieben wiedergegeben. Von besonderer Bedeutung ist, daß die benachbarten Erhöhungen 33 und Vertiefungen 32 unmittelbar aneinandergrenzen, derart, daß das Kunststoffnetzwerk auch in den Grenzbereichen benachbarter Erhöhungen 33 und Vertiefungen 32 zweidimensional verzogen ist und dort die vergrößerten Zwischenräume 34 vorliegen. Durch das Abwechseln von in entgegengesetzten Richtungen verzogenen Erhöhungen 33 und Vertiefungen 32 wird eine für die Aufnahme großer Mengen an aktiver Masse, für eine besonders gute mechanische Halterung der aktiven Masse und für eine kurzwegige Stromableitung aus der bzw. Stromeinleitung in die aktive Masse besonders geeignete Gitterplatte 11 geschaffen.

Auch das Abbiegen der Ränder der Gitterplatte bei 35 gemäß Fig. 1 und 2, und zwar abwechselnd zur einen und zur anderen Seite bedingt eine gute Halterung der später eingebrachten aktiven Masse vom Rande der Gitterplatte 11 her.

Die Speicherbereiche 12 umfassen jeweils eine große Vielzahl von unmittelbar benachbarten Erhöhungen 33 und Vertiefungen 32, zwischen denen vorzugsweise keine zweidimensionalen Stromleitbereiche vorhanden sind. Die Stromleitbereiche 14 sind vielmehr lediglich an einigen oder allen Grenzen der Speicherbereiche 12 vorhanden. Alle Stromleitbereiche 14 hängen unmittelbar zusammen, so daß von jedem Punkt eines Stromleitbereiches 14 zumindest ein nur weitere Stromleitbereiche 14 enthaltender Strompfad zur Anschlußfahne 15 führt.

Wie sich aus Fig. 1 ergibt, sind die Speicherbereiche 12 möglichst großflächig innerhalb der relativ schmalen Stromleitbereiche 14 inselartig angeordnet, so daß sich zwischen den einzelnen Speicherbereichen 12 jeweils schmale straßenartige Stromleitbereiche 14 befinden, die alle miteinander zusammenhängen, so daß eine einwandfreie und widerstandsarme Stromleitung zur bzw. von der Anschlußfahne 15 gewährleistet ist. Insgesamt werden die Speicherbereiche 12 und die Stromleitbereiche 14 so über die Fläche der Gitterplatte 11 verteilt, daß zum einen eine möglichst große Speicherfähigkeit für die aktive Masse gewährleistet ist, während andererseits ausreichend widerstandsarme Stromleitpfade von den einzelnen Speicherbereichen 12 zur Anschlußfahne 15 führen, welche ebenfalls eben, d.h. als Stromleitbereich ausgebildet ist.

Ist die Anschlußfahne 15 wie nach Fig. 1 in einer Ecke der Gitterplatte 11 angeordnet, so soll zur diagonal gegenüberliegenden Ecke 16 ein geradliniger und diagonal verlaufender Stromleitbereich 14 führen. Eine entsprechende Anordnung ist auch dann vorteilhaft, wenn die Anschlußfahne 15 etwas mehr zur Mitte der Gitterplatte 11 hin verschoben ist.

Nach Fig. 3 können die straßenartigen Stromleitbereiche 14 rinnenförmig ausgebildet und beispielsweise mit Blei 23 ausgegossen sein, wodurch die Stromleitfähigkeit in diesen Bereichen erhöht ist. Statt die Rinne 14 mit Blei auszugießen, kann sie auch mit aktiver Masse entsprechend ausgefüllt sein.

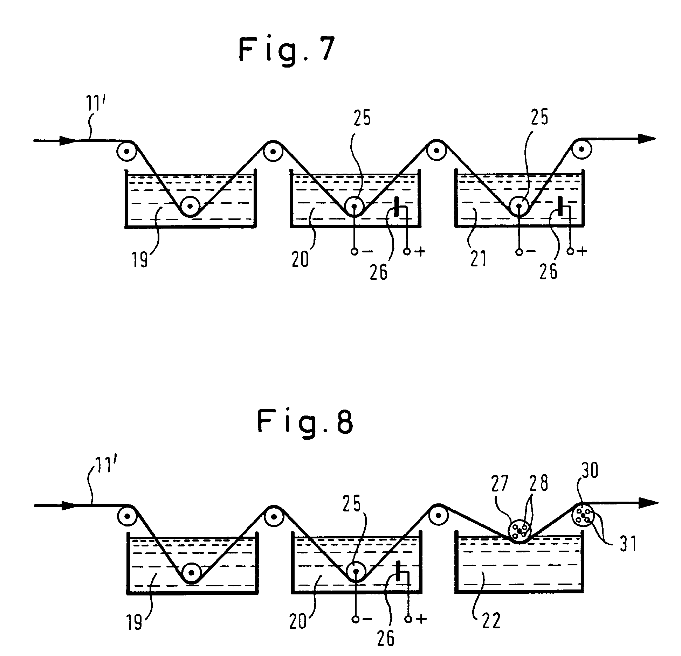

Nach Fig. 7 kann die Herstellung der erfindungsgemäßen Elektrodenplatte wirtschaftlich dadurch erfolgen, daß ein bereits verformtes und verkupfertes Kunststoff-Netzwerk 11' in Bandform nacheinander durch ein Reinigungsbad 19, ein galvanisches Blei-Zinnlegierungsbad 20 und ein galvanisches Bleibad 21 kontinuierlich hindurchgeführt wird. Über elektrisch leitende Umlenkwalzen 25, die an einer negativen Spannung liegen wird dabei das Band 11' negativ aufgeladen. In Zusammenwirkung mit einer in den Bädern vorhandenen auf positivem Potential liegenden Elektrode 26 wird so eine Ablagerung einer Blei-Zinnlegierung im Bad 20 und von Blei im Bad 21 auf dem Band 11' gewährleistet. Das aus galvanischem Bleibad 21 austretende Band ist somit mit einer Kupferschicht, einer Blei-Zinnlegierungsschicht und einer Bleischicht versehen.

Gemäß Fig. 8 wird das bereits verkupferte und mit den Speicherbereichen 12 sowie den Stromleitbereichen 14 versehene Band 11' nach Durchführung durch das Reinigungsbad 19 und das galvanische Blei-Zinn-Legierungsbad 20 durch eine Bleischmelze 22 hindurchgeführt. Die in der Schmelze angeordnete hitzebeständige Umlenkwalze 27 befindet sich dabei relativ nahe der Oberfläche der Bleischmelze 22, damit das Band 11' nur ganz kurzzeitig in die Bleischmelze 22 eintaucht. Auf diese Weise wird ein Schmelzen oder gar eine Zersetzung der Kunststoffäden des Kunststoff-Netzwerkes 11' wirksam vermieden.

Um eine zu starke Erhitzung des Bandes 11' in der Bleischmelze 22 zu vermeiden, kann die Umlenkwalze 27 erfindungsgemäß auch gekühlt sein, indem beispielsweise eine Kühlflüssigkeit durch schematisch angedeutete axiale Kühlkänale 28 der Umlenkwalze 27 hindurchgeleitet wird.

Weiter ist es zweckmäßig, wenn unmittelbar im Anschluß an das Austauschen der Gitterplatte 11 aus dem Schmelzbad eine Kühlung der Gitterplatte 11 bzw. des Bandes 11' erfolgt. Dies kann nach Fig. 8 z.B. dadurch geschehen, daß eine mit Kühlkanälen 31 versehene Kühlwalze 30 für die Umlenkung des Bandes 11' verwendet wird.

Es ist nicht unbedingt erforderlich, nach der Reinigung noch eine galvanische Vorbeschichtung des Netzwerkes gemäß den Fig. 7 und 8 vorzusehen. Eine wirtschaftlichere und schnellere Herstellung läßt sich dadurch realisieren, daß unmittelbar nach dem Reinigen das kurzzeitige Eintauchen der Gitterplatte 11 bzw. des Bandes 11' in die Bleischmelze 22 (Fig. 8) erfolgt.

Für eine das Kunststoffmaterial nicht schädigende Verbleiung der Gitterplatte (im Schmelzbad) ist die Bleitemperatur, die Verweildauer und die anschließende Abkühlgeschwindigkeit maßgebend.

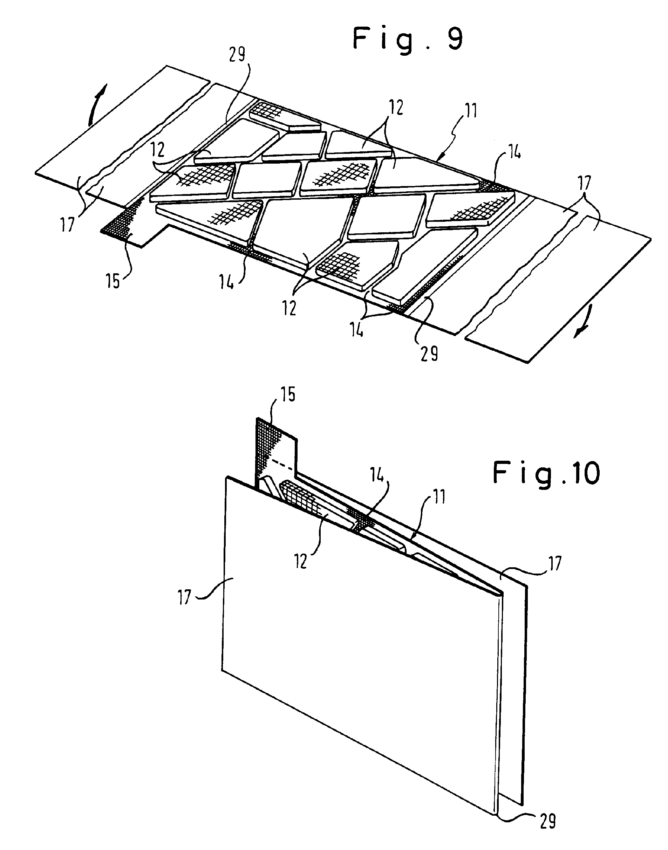

Nach Fig. 9 kann die Gitterplatte 11 auch über zwei Faltscharniere 29 mit zwei gleichflächigen Separatorplatten 17 versehen sein, welche praktisch aus dem gleichen, jedoch nicht mit Metall beschichteten Kunststoff-Netzwerk bestehen wie die Gitterplatte 11. Um eine ausreichende Dicke für die Separatorplatten 17 zu gewährleisten, können diese insgesamt in ähnlicher Weise verformt sein, wie die Gitterplatte 11 in den Speicherbereichen 12.

Durch Herumklappen der beiden Separatorplatten 17 um die Faltscharniere 29 in Richtung der Pfeile in Fig. 9 kann die Anordnung in die aus Fig. 10 ersichtliche Position gebracht werden, so daß mit eine und demselben Kunststoff-Netzwerk eine Gesamtanordnung aus einer die negative Elektrode bildenden Gitterplatte 11 und zwei auf entgegengesetzten Seiten dieser Gitterplatte 11 angeordneten Separatorplatten 27 verwirklicht ist. Es ist auch denkbar, eine gefaltete Tasche aus zwei Separatorplatten herzustellen und in diese Tasche eine gesondert gefertigte Gitterplatte 11 einzustellen.

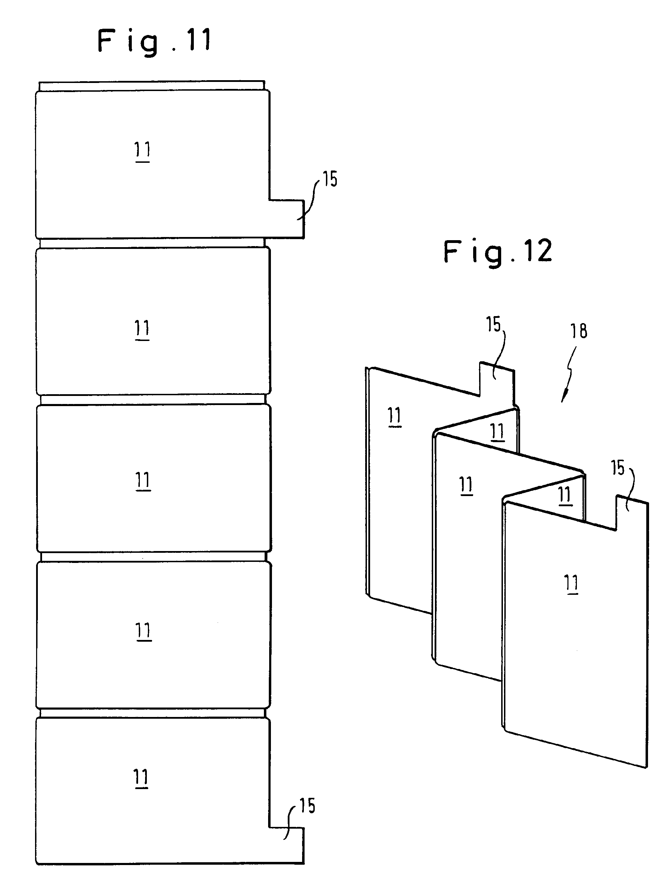

Nach Fig. 11 können beispielsweise mittels des Herstellungsverfahrens nach den Fig. 7 oder 8 zahlreiche erfindungsgemäße Gitterplatten 11 bandartig als ein Stück hergestellt werden. Nach der Herstellung werden dann mehrere der bandartig aneinander hängenden Gitterplatten 11 ausgeschnitten und gemäß Fig. 12 zu einem Plattensatz 18 zusammengefaltet, wobei die einzelnen Platten an den Scharnieren in leitender Verbindung stehen, so daß nur an einem oder beiden Enden Anschlußfahnen 15 vorhanden sein müssen.

Wesentlich ist, daß die Vorbereitung der Gitterplatte für den Einsatz in einem Akkumulator durch Überziehen mit Blei-Zinn bzw. Blei erst vorgenommen wird, wenn die bereits mit den Stromleitbereichen 14 und den Speicherbereichen 12 vorgeformte und auch schon mit Kupfer überzogene Polymernetzwerkstruktur vorliegt.

Die geometrische Gitterstruktur ist bei Anwendung der erfindungsgemäßen Verfahren nicht mehr durch gießtechnische Grenzen oder durch die vorgegebenen Formen von Streckmetallen beschränkt. Die erfindungsgemäßen Verfahren erlauben die Herstellung bisher nicht realisierbarer Strukturen.

Die mechanische Haftung der aktiven Massen an den Gitterplatten ist ein bekanntes Problem bei der Herstellung von Elektroden für Akkumulatoren. Die Eigenschaften der vorstehend beschriebenen erfindungsgemäßen Elektroden sind in dieser Hinsicht insofern verbessert, als durch die Verwendung einer großen Anzahl von durch die Kunststoffäden bzw. -fasern gebildeten dünnen Gitterstege anstelle weniger dicker Stege in konventionellen Gittern die Kontaktfläche zwischen dem Gitter und der aktiven Masse erheblich vergrößert ist. Da die durch die Kunststoffäden gebildeten Gitterstege und insbesondere auch alle darin enthaltenen Monofilamente durchgehend mit Kupfer überzogen sind, wird hierdurch ebenfalls die elektrische Leitfähigkeit günstig beeinflußt. Weiter ist die Ausnutzung der aktiven Masse bei der erfindungsgemäßen Elektrode wesentlich verbessert.

Für die Vorteile der erfindungsgemäßen Elektrode ist unter anderem die enge Grundmaschenweite der für Kunststoff-Netzwerke typischen Gitterstruktur maßgebend, welche jedoch im Bereich der Vertiefungen 32 und der Erhöhungen 33 stark vergrößert ist.

Außer einer wässrigen Zitronensäurelösung können für das Reinigungsbad auch wässrige Lösungen anderer Hydroxycarbonsäuren verwendet werden. Die Tauchzeit im Reinigungsbad beträgt zweckmäßigerweise 2 bis 10 sec..

Nach dem Reinigen sollten noch an der Gitterplatte haftende Reste von Reinigungsbad mittels Druckluft entfernt werden. Die vollständige Entfernung von Resten des Reinigungsbades vor dem Überziehen mit Blei-Zinn oder Blei ist deswegen wichtig, um in dem anschließenden Schritt eine vollständige und ununterbrochene Beschichtung zu erhalten.

Falls eine relativ spröde aktive Masse verwendet wird, werden die Vertiefungen 32 und Erhöhungen 33 schmaler ausgebildet, als wenn eine viskosere Masse zur Anwendung kommt.

Die aktive Masse kann beispielsweise mittels Walzen von beiden Seiten auf die erfindungsgemäße Elektrode aufgetragen werden. Es kommt darauf an, die Masse gleichmäßig über alle Vertiefungen und Erhöhungen sowie ggfs. auch in den Rinnen der Stromleitbereiche zu verteilen. Zur Egalisierung und Verdichtung der aktiven Masse kann eine Ultraschallbestrahlung angewandt werden, die zu einer Verflüssigung der Masse und damit zu einem verbeserten Fließvorgang führt. Wenn die Masse relativ wenig viskos ist und/oder durch Ultraschall bestrahlt wird, kann auch eine einseitige Auftragung erfolgen, wobei dann die Masse durch die Maschen der Speicherbereiche hindurch auf die andere Seite tritt.

Als aktive Masse sind sämtliche mit einer pasten- bzw. salbenartigen Konsistenz herstellbare Massen geeignet. Insbesondere bei der Herstellung von Elektroden für Bleiakkumulatoren kann mit einer basischen Masse der Dichte 3 bis 5,7 g/ml gearbeitet werden. Die Paste kann hier entweder von Hand oder Maschine eingestrichen werden. Zur Verbesserung der Masseverteilung ist die Verwendung von Ultraschall zur zwischenzeitlichen Verflüssigung der Masse möglich.

Insbesondere bei dichten Netzwerken ist eine doppelseitige Pastierung von Vorteil, um eine vollständige Einhüllung aller Netzwerkteile zu erreichen. Des weiteren kann eine vollständige Umhüllung eines dichten Netzwerkes durch Verwendung von dünnflüssigeren Mischungen und anschließendem Abpressen mit einem saugfähigen Vliesmaterial, welches später in der fertigen Zelle als Säurereservoir verwendet wird, erfolgen.

Die Erhöhungen 33 und Vertiefungen 32 können je nach Einzelfall unterschiedliche Formen haben, z.B. der Form von Kegeln oder Kegelstümpfen, Pyramiden oder Pyramidenstümpfen mit unterschiedlich vieleckiger Basis, Zylinder, Prismen, sphärische Segmente usw. Besonders bevorzugt ist es auch, wenn die Scheitelpunkte bzw. -flächen der Erhebungen alle in einer Ebene und parallel zur Basisfläche liegen, was sinngemäß genauso für die Vertiefungen gilt.

## Patentansprüche

1. Elektrode für elektrochemische Zellen, insbesondere Negativelektrode für Akkumulatoren, vorzugsweise Bleiakkumulatoren, bestehend aus einer Gitterplatte (11, 11'), die als Träger für die aktive Masse und zur Stromzu- und -abführung dient und als Kunststoffnetzwerk ausgebildet ist, das aus bevorzugt mit einer gut leitenden, dünnen Metallschicht, insbesondere aus Kupfer, überzogenen Kunststoffäden besteht und zur Bildung einer dreidimensionalen Struktur mit vorzugsweise durch Tiefziehen erzeugten, über ihre Fläche verteilten buckelartigen Vertiefungen (32) und/oder Erhöhungen (33) versehen ist, in deren Bereich der Abstand zwischen den Kunststoffäden vergrößert ist,
dadurch **gekennzeichnet**,
daß das Kunststoffnetzwerk mit wenigstens einer weiteren Beschichtung aus einer Blei-Zinnlegierung oder aus Blei überzogen ist und in wenigstens einen für die Aufnahme der aktiven Masse vorgesehenen Speicherbereich (12), wo sich eine Vielzahl von Vertiefungen (32) und/oder Erhöhungen (33) befinden, sowie in wenigstens einen Stromleitbereich (14), wo das Kunststoffnetzwerk eine flächige, zweidimensionale Struktur hat, unterteilt ist.

2. Elektrode nach Anspruch 1,
dadurch **gekennzeichnet**,
daß das Kunststoffnetzwerk in dem Speicherbereich (12) an im wesentlichen allen Stellen vorzugsweise weitgehend im gleichen Maße zweidimensional verzogen ist, während es im Stromleitbereich (14) unverzogen ist.

3. Elektrode nach Anspruch 1 oder 2,
dadurch **gekennzeichnet**,
daß in den Speicherbereichen (12) nur die Kunststoffäden (13) von der Blei-Zinnlegierung oder dem Blei überzogen sind und die Maschenöffnungen (34) frei bleiben, während in den Stromleitbereichen (14) auch die Maschen zwischen den Kunststoffäden (13) von der Blei-Zinnlegierung oder dem Blei ausgefüllt sind und/oder daß die weitere Beschichtung aus einer Blei-Cadmium-Selen-Arsen-Antimon-Legierung, insbesondere einer Blei-Zinnlegierung mit vor zugsweise 20 bis 90 % Blei, insbesondere etwa 80 bis 90 % Blei (Rest Zinn) besteht, die vorzugsweise eine Dicke von 5 bis 20, insbesondere etwa 10 µm aufweist, falls noch eine weitere Bleibeschichtung aufgebracht wird, und eine Dicke von 30 bis 150 µm, vorzugsweise 40 bis 60 µm, insbesondere 50 um aufweist, falls nur eine Schicht aus einer Blei-Zinnlegierung aufgebracht wird, wobei vorzugsweise auf die gut leitende Metallschicht oder bevorzugt auf die weitere Beschichtung eine Bleischicht mit einer Dicke von vorzugsweise 30 bis 70, insbesondere 40 bis 60 und bevorzugt etwa 50 µm aufgebracht ist, und/oder daß von den weiteren Beschichtungen wenigstens die erste galvanisch aufgebracht ist.

4. Elektrode nach einem der vorhergehenden Ansprüche,
dadurch **gekennzeichnet**,
daß von den weiteren Beschichtungen wenigstens eine und vorzugsweise die letzte durch Eintauchen in ein Schmelzbad des Überzugsmetalls aufgebracht ist, wobei insbesondere die Eintauchzeiten während der das Netzwerk sich im Schmelzbad befindet, so kurz sind, daß der Schmelzpunkt des Kunststoffmaterials, aus dem das Kunststoffnetzwerk besteht, nicht überschritten wird, wobei insbesondere die Temperatur des Schmelzbades 400 bis 700° K, insbesondere 500 bis 600° K und die Eintauchzeit 1 bis 4, insbesondere 1 bis 2 sec. beträgt.

5. Elektrode nach einem der vorhergehenden Ansprüche,
dadurch **gekennzeichnet**,
daß vor Aufbringen der weiteren Beschichtung die mit dem gut leitenden Metall überzogene Gitterplatte (11, 11') in einem Reinigungsbad, das vorzugsweise aus einer wässerigen Zitronensäurelösung, die insbesondere 20 %-ig bis gesättigt ist, besteht, einem Reinigungsprozeß unterzogen wird, wobei insbesondere die Aufenthaltszeit im Reinigungsbad 2 bis 10 und insbesondere 4 bis 8 sowie bevorzugt 5 sec. beträgt, und/oder daß die Reinigungsbadtemperatur 250° bis 350°, insbesondere 290° bis 320° und bevorzugt etwa 300° K beträgt, und/oder daß alle Metallisierungen des Kunststoffnetzwerkes nach der insbesondere durch Tiefziehen erfolgenden Verformung durchgeführt werden.

6. Elektrode nach einem der vorhergehenden Ansprüche,
dadurch **gekennzeichnet**,
daß wenigstens an der Seite der Gitterplatte (11), wo die Stromabnahme erfolgt, ein Stromleitbereich (14) vorgesehen ist, wobei insbesondere die Anschlußfahne (15) der Gitterplatte (11) als Stromleitbereich (14) ausgebildet ist und/oder daß der um die Gitterplatte (11) herum verlaufende Randbereich als Stromleitbereich (14) ausgebildet ist.

7. Elektrode nach einem der vorhergehenden Ansprüche,
dadurch **gekennzeichnet**,
daß zwischen inselartig angeordneten Speicherbereichen (12) straßenartig verlaufende Stromleitbereiche (14) angeordnet sind und/oder daß von der Stelle, insbesondere Ecke der Gitterplatte (11), wo die Anschlußfahne (15) angeordnet ist, zur diagonal gegenüberliegenden Ecke (16) ein diagonaler Stromleitbereich (14) verläuft.

8. Elektrode nach einem der vorhergehenden Ansprüche,
dadurch **gekennzeichnet**,
daß mehrere Gitterplatten (11) als zusammenhängendes Band (18) ausgebildet sind, das zu einem Plattensatz (18) gefaltet ist.

9. Elektrode nach einem der vorhergehenden Ansprüche,
dadurch **gekennzeichnet**,
daß das Kunststoffnetzwerk am Rand vorzugsweise um 90° aus der Plattenebene und insbesondere abwechselnd in der einen oder anderen Richtung senkrecht zur Plattenebene abgebogene Massentragstege (35) aufweist, welche sich zweckmäßig etwa ebensoweit aus der Plattenebene wie die Vertiefungen (32) bzw. die Erhöhungen (33) erheben und auch Stromleitbereiche (14) darstellen.

10. Elektrode nach einem der vorhergehenden Ansprüche,
dadurch **gekennzeichnet**,
daß die Stromleitbereiche (14) wenigstens teilweise rillen- oder rinnenförmig ausgebildet sind, wobei die Längsrichtung der Rillen bzw. Rinnen im wesentlichen in Stromflußrichtung liegt, und daß die Rillen bzw. Rinnen zumindest teilweise mit der Blei-Zinnlegierung bzw. Blei ausgegossen sind oder mit aktiver Masse gefüllt sind und/oder daß mehrere durch Stromleitbereiche (14) getrennte Speicherbereiche (12) vorgesehen sind und alle Stromleitbereiche (14) unmittelbar miteinander zusammenhängen.

## Claims

1. An electrode for electrochemical cells, in particular a negative electrode for storage batteries, preferably lead-acid storage batteries, comprising a grid plate (11, 11') serving as the carrier for the active material and for current supply and return and having the form of a plastic network consisting of plastic threads coated preferably with a highly conductive, thin layer of metal, particularly of copper, and featuring lobe-shaped indentations (32) and/or projections (33) preferably formed by deep-drawing and distributed over its surface to form a three-dimensional structure, the spacing of the threads being enlarged in the region of the indentations and projections characterized in that said plastic network is coated with at least one further coating of a lead-tin alloy or of lead and is subdivided into at least one storage zone (12) for receiving the active material, where a plurality of indentations (32) and/or projections (33) are located, and also into at least one current conducting zone (14) in which said plastic network has an areal,two-dimensional structure.

2. An electrode according to claim 1, wherein said plastic network is two-dimensionally deformed in said storage zone (12) at substantially all locations, preferably to the same degree,whereas it is not deformed in said current conducting zone (14).

3. An electrode according to claim 1 or 2, wherein in the storage zones (12) only the plastic threads (13) are coated with the lead-tin alloy or lead and the mesh openings (34) remain free, whereas in the current conducting zones (14) the meshes between the plastic threads (13) are also filled out with the lead-tin alloy or lead, and/or in that the further coating comprises a lead-cadmium-selenium-arsenic-antimony alloy, particularly a lead-tin alloy having preferably 20 to 90% lead, particularly approx. 80 to 90% lead (remainder tin), preferably having a thickness of preferably 5 to 20, particularly approx. 10 µm, should a further lead coating be applied, and a thickness of 30 to 150 µm, preferably 40 to 60 µm, particularly 50 µm should only a single layer of a lead-tin alloy be applied, with preferably a lead coating having a thickness of preferably 30 to 70, particularly 40 to 60 and preferably approx. 50 µm being applied onto the highly conductive metal layer or preferably onto the further coating, and/or in that of the further coatings at least the first is applied galvanically.

4. An electrode according to any of the preceding claims, characterized in that of the further coatings at least one and preferably the last one is applied by dipping in a melt bath of the coating metal, the dip times during which the network is located in the melt bath being so short that the melting point of the plastic material from which the plastic network is made is not exceeded, the temperature of the melt bath amounting in particular to 400 to 700° K, especially 500 to 600° K and the dip time being 1 to 4, particularly 1 to 2 sec.

5. An electrode according to any of the preceding claims, characterized in that prior to applying the further coating, the grid plate (11, 11') coated with the well conducting metal is subjected to a cleaning process in a cleaning bath preferably comprising an aqueous solution of citric acid, which is in particular of a strength from 20% to saturated, with the dwell time in the cleaning bath amounting in particular to 2 to 10, especially 4 to 8 and preferably 5 sec, and/or in that the temperature in the cleaning bath amounts to 250° to 350°, in particular 290° to 320° and preferably to approx. 300° K, and/or in that all metallizing of the plastic network is executed after shaping which is in particular performed by deep-drawing.

6. An electrode according to any of the preceding claims, characterized in that a current conducting zone (14) is provided at least on the side of the grid plate (11) from which the current is extracted, the connecting lug (15) of the grid plate (11) being formed as a current conducting zone (14), and/or in that the marginal region extending around the grid plate (11) is formed to be the current conducting zone (14).

7. An electrode according to any of the preceding claims, characterized in that current conducting zones (14) extending in street-like manner are formed between the insularly arranged storage zones (12), and/or in that a diagonal current conducting zone (14) runs from the location of the grid plate where the connecting lug (15) is arranged, in particular from a corner of the grid plate to the diagonally oppositely disposed corner.

8. An electrode according to any of the preceding claims, characterized in that a plurality of grid plates (11) are formed as a continuous band (18) and folded together to produce a set of plates (18).

9. An electrode according to any of the preceding claims, characterized in that the edge of the plastic network has material holding flanges (35) bent preferably at 90° out of the plane of the plate and, in particular, alternately bent in the one or other direction perpendicular to the plane of the plate, said flanges protruding expediently roughly the same distance out of the plane of the plate as the indentations (32) and projections (33) respectively and also constituting current conducting zones (14).

10. An electrode according to any of the preceding claims, characterized in that the current conducting zones (14) are at least partly of grooved or fluted form with the longitudinal direction of the grooves or flutes lying substantially in the direction of current flow; and in that said grooves or flutes are at least partly cast out with the lead-tin alloy or lead or are filled with the active material, and/or in that a plurality of storage zones (12) separated by current conducting zones (14) are provided and all current conducting zones are directly connected together.

## Revendications

1. Electrode pour cellule électrochimique, en particulier électrode négative pour accumulateurs, de préférence accumulateurs en plomb, constitués d'une plaque grille (11,11') qui sert de support pour la masse active et comme arrivée et départ du courant et formée comme un réseau de matière plastique, qui est constituée de fibres en matière plastique revêtues d'une couche métallique mince, de préférence bonne conductrice, en particulier cuivre, et munie, en vue de la formation d'une structure tridimensionnelle, de dépressions (32) et/ou surélévations du genre bosses (33) réalisées de préférence par étirage profond, réparties sur sa surface, en formant des zones où la distance entre fibres en matière plastique est
augmentée, caractérisée en ce que
le réseau de matière plastique est revêtu d'au moins un autre revêtement en alliage plomb-étain ou en plomb et il est divisé en au moins un domaine d'accumulation (12) prévu pour recevoir la masse active, où se trouve une pluralité de dépressions (32) et/ou d'élévations (33), de même en au moins un domaine de conduction de courant (14), où le réseau de matière plastique a une structure de surface bidimensionnelle.

2. Electrode selon la revendication 1, caractérisé en ce que le réseau en matière plastique est étiré dans le domaine d'accumulation (12) dans sensiblement tous les endroits de faço! de préférence uniformément
bidimensionnelle tandis qu'il n'est pas étiré dans le domaine de conduction (14).

3. Electrode selon la revendication 1 ou 2,
caractérisé en ce que dans les domaines d'accumulation (12) seules les fibres (13) sont revêtues d'alliage de plomb-étain ou de plomb et les ouvertures de mailles (34) restent libres tandis que dans les domaines de conduction (14) les mailles (34) entre fibres de matière plastique (13) sont aussi remplies d'alliage de plomb-étain ou de plomb et/ou en ce que le revêtement additionnel est en un alliage plomb-étain-selenium-arsenic-antimoine, en particulier d'un alliage plomb-étain avec de préférence 20 à 90 % de plomb, en particulier 80 à 90 % de plomb (reste étain), qui présente de préférence une épaisseur de 5 à 20, en particulier environ 10µm, éventuellement encore une autre couche de plomb est rapportée, et présente une épaisseur de 30 à 150µm de préférence 40 à 60µm, en particulier 50µm, et/ou le cas échéant on rapporte une seule couche d'un alliage plomb-étain, ou de préférence on dépose sur la couche métallique ou sur le revêtement additionnel une couche de plomb avec une épaisseur de 30 à 70, en particulier 40 à 60 et de préférence environ 50µm, et/ou en ce que des autres revêtements au moins le premier est déposé galvaniquement.

4. Electrode suivant l'une quelconque des revendications précédentes, caractérisée en ce que des revêtements additionnels, au moins un, et de préférence le dernier, est déposé par immersion dans un bain de fusion du métal de revêtement, où en particulier les temps d'immersion pendant lesquels le réseau se trouve dans le bain, sont tellement courts que le point de fusion du matériau en matière plastique dont est fait le réseau de matière plastique, n'est pas dépassé, tandis que la température du bain de fusion se situe entre 400 et 700° K, en particulier 500 à 600° K et le temps d'immersion est de 1 à 4 et en particulier de 1 à 2 secondes.

5. Electrode selon l'une quelconque des revendications précédentes caractérisée en ce que avant application du revêtement suivant, la plaque de grille (11,11') revêtue de métal bon conducteur est soumise à un processus de nettoyage dans un bain de nettoyage qui est constitué de préférence d'une solution aqueuse d'acide nitrique, qui se situe en particulier entre 20 % et la saturation, tandis que le temps de séjour dans le bain de nettoyage est de 2 à 10 et en particulier 4 à 8, et de préférence 5 secondes, et/ou en ce que la température du bain de nettoyage est de 250° à 350°, en particulier 290° à 320° et de préférence environ 320° K et/ou en ce que toutes les métallisations du réseau en matière plastique sont effectuées après mise en forme en particulier par étirage profond.

6. Electrode selon l'une quelconque des revendications précédentes caractérisée en ce que au moins du côté de la plaque de grille (11) où s'effectue la prise de courant, il est prévu un domaine de conduction (14), où en particulier le point de raccordement (15) de la plaque de grille (11) est constitué comme domaine de conduction (14) et/ou en ce que la zone de bord entourant la plaque de grille (11) est constituée comme domaine de conduction (14).

7. Electrode selon l'une quelconque des revendications précédentes caractérisée en ce que entre les domaines d'accumulation (12) disposés en ilots on ménage des domaines de conduction (14) comparables à des chemins et/ou en ce que à partir des endroits, en particulier du coin de la plaque de grille (11) où se situe la borne de raccordement (15) et vers le coin diagonalement opposé (16) s'étend un domaine de conduction diagonal (14).

8. Electrode selon l'une des revendications précédentes, caractérisé en ce que plusieurs plaques de grille (11) sont conformées comme une bande d'un seul tenant qui est repliée en un jeu de plaques (18).

9. Electrode selon l'une quelconque des revendications précédentes, caractérisée en ce que le réseau de matière plastique présente pliés de préférence à 90° en dehors du plan de plaque et en particulier alternativement de part et d'autre et perpendiculairement au plan de plaque, des doigts porte masse (35) qui s'étendant en dehors du plan de plaque à peu près aussi loin que les dépressions (32) ou les élévations (33) constituent également des domaines de conduction (14).

10. Electrode selon l'une des revendications précédentes caractérisée en ce que les domaines de conduction (14) sont au moins partiellement en forme de nervures ou de rainures, la direction longitudinale de nervures ou de rainures étant essentiellement orientée selon la direction d'écoulement de courant, et en ce que les nervures ou rainures sont au moins partiellement réalisées par moulage de l'alliage plomb-étain ou du plomb ou remplis avec la masse active et/ou en ce qu'il est prévu plusieurs domaines d'accumulation (12) séparés par des domaines de conduction (14), tous les domaines de conduction (14) étant directement reliés entre eux.
